(19) **Europäisches Patentamt / European Patent Office / Office européen des brevets**

(11) **EP 2 551 191 B1**

(12) **FASCICULE DE BREVET EUROPEEN**

(45) Date de publication et mention
de la délivrance du brevet:
**05.09.2018 Bulletin 2018/36**

(51) Int Cl.:
**B64C 13/50** (2006.01)     **B64D 45/00** (2006.01)

(21) Numéro de dépôt: **12177427.7**

(22) Date de dépôt: **23.07.2012**

(54) **Procédé et dispositif de détection de l'embarquement d'une gouverne d'aéronef**

Verfahren und Vorrichtung zum Erkennen des Ausfahrens einer Steuerfläche eines Luftfahrzeugs

Method and device for detecting the deployment of an aircraft control surface.

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.07.2011 FR 1156900**

(43) Date de publication de la demande:
**30.01.2013 Bulletin 2013/05**

(73) Titulaires:
• **Airbus Opérations SAS
31060 Toulouse (FR)**
• **UNIVERSITE DE BORDEAUX I
33405 Talence Cedex (FR)**
• **Centre National de la Recherche Scientifique
75794 Paris Cedex 16 (FR)**

(72) Inventeurs:
• **Goupil, Philippe
32600 Beaupuy (FR)**

• **Dayre, Rémy
31820 Pibrac (FR)**
• **Le Berre, Hervé
31490 Leguevin (FR)**
• **Gheorghe, Anca
31000 Toulouse (FR)**
• **Zolghadri, Ali
33850 Leognan (FR)**
• **Cieslak, Jérôme
33400 Talence (FR)**

(74) Mandataire: **Gevers & Orès
41 avenue de Friedland
75008 Paris (FR)**

(56) Documents cités:
**EP-A2- 2 026 158     FR-A1- 2 936 067
US-A1- 2010 001 678**

**Description**

La présente invention concerne un procédé et un dispositif de détection de l'embarquement d'une gouverne d'aéronef qui est asservie en position par une chaîne d'asservissement, ainsi qu'un système de commandes de vol électriques comportant un tel dispositif de détection.

La présente invention s'applique à une chaîne d'asservissement :

- qui est destinée à asservir en position tous types de gouverne d'aéronef, tels que des ailerons, des spoilers ou une gouverne de profondeur par exemple ;
- qui fait partie d'un système de commandes de vol électriques de l'aéronef ; et
- qui comporte :

   • ladite gouverne qui est mobile, et dont la position par rapport à l'aéronef est réglée par au moins un actionneur ;
   • ledit actionneur qui règle la position de ladite gouverne, en fonction d'au moins un ordre d'actionnement reçu ;
   • au moins un capteur qui mesure la position effective de ladite gouverne ; et
   • un calculateur (de commandes de vol) qui élabore un ordre d'actionnement de la gouverne, transmis audit actionneur, à partir de ladite position effective mesurée et d'un ordre de commande calculé à partir de l'action du pilote sur un manche de commande ou de l'action du pilote automatique et de l'état inertiel de l'aéronef.

Dans le cadre de la présente invention, on entend par « embarquement d'une gouverne » un mouvement non commandé de cette gouverne (c'est-à-dire un mouvement qui n'est généré par aucune commande d'un moyen destiné à sa commande sur l'aéronef), qui peut amener cette dernière jusqu'à sa butée si ce phénomène n'est pas détecté et arrêté.

La présente invention concerne donc la détection d'un embarquement d'au moins une gouverne d'aéronef, dû à au moins une panne survenant dans la chaîne d'asservissement en position associée, au sein d'un système de commandes de vol.

On sait que les calculateurs de commandes de vol réalisent, entre autres, l'asservissement en position des gouvernes d'un aéronef, par exemple d'un avion de transport. Le mouvement de la gouverne est généré par un actionneur qui peut être, soit en mode actif, soit en mode passif. On prévoit, en général, deux actionneurs par gouverne. Un calculateur dit « maître » réalise l'asservissement, en envoyant une commande sur l'actionneur actif. L'autre actionneur, associé à un deuxième calculateur dit « esclave », est forcé en mode passif à suivre le mouvement de la gouverne. Si le calculateur maître détecte, par l'intermédiaire de moyens de surveillance spécifiques, une panne, il passe l'actionneur actif en mode passif, et donne la main au calculateur esclave qui asservit le deuxième actionneur (passé alors en mode actif).

Au sein de la chaîne d'asservissement en position, du calculateur de commandes de vol à l'actionneur, y compris au niveau de ces deux éléments, on trouve différents éléments ou constituants susceptibles de générer, en mode défaillant, un signal conduisant à l'embarquement de la gouverne. L'embarquement d'une gouverne, en fonction du point de vol de l'aéronef, peut avoir des conséquences sur le guidage de ce dernier et sur le dimensionnement de sa structure en raison des charges générées. Il est donc nécessaire de pouvoir détecter et passiver une telle panne très rapidement, c'est-à-dire avant que la position de la gouverne ne soit trop importante, l'action de passiver consistant à limiter ou à stopper l'effet de la panne pour éviter sa propagation.

Par ailleurs, on connaît par le document FR 2 936 067, un procédé et un dispositif de détection de pannes oscillatoires dans une chaîne d'asservissement en position d'une gouverne d'aéronef. Ce procédé de détection prévoit de former une valeur résiduelle en calculant la différence entre une position théorique de la gouverne et sa position effective, puis de compter tous les dépassements successifs et alternés d'une valeur seuil par cette valeur résiduelle, la détection de la panne oscillatoire se produisant lorsque le comptage dépasse un nombre prédéterminé.

La présente invention a pour objet de remédier aux inconvénients précités. Elle concerne un procédé, qui est particulièrement robuste et qui est applicable à tout type d'aéronef à commandes de vol électriques, pour détecter au moins un embarquement d'une gouverne de l'aéronef, qui est asservie en position par une chaîne d'asservissement, ledit procédé permettant de détecter un tel embarquement quel que soit son profil dynamique et quelle que soit l'origine de la panne.

A cet effet, selon l'invention, ledit procédé de détection d'un embarquement d'une gouverne qui est asservie en position par une chaîne d'asservissement faisant partie d'un système de commandes de vol électriques de l'aéronef et comportant :

- ladite gouverne qui est mobile, et dont la position par rapport à l'aéronef est réglée par au moins un actionneur ;
- ledit actionneur qui règle la position de ladite gouverne, en fonction d'au moins un ordre d'actionnement reçu sous forme de commande d'asservissement ;

- au moins un capteur qui mesure la position effective de ladite gouverne ; et
- au moins un calculateur qui élabore un ordre de commande de gouverne, qui reçoit ladite position effective mesurée et qui en déduit un ordre d'actionnement qui est transmis audit actionneur sous forme d'une commande d'asservissement,

est remarquable en ce que l'on réalise, de façon automatique et répétitive, la suite d'étapes successives suivante :

a) on détermine un courant d'asservissement théorique représentatif de ladite commande d'asservissement émise par ledit calculateur (c'est-à-dire similaire ou identique à cette dernière, comme précisé ci-dessous) ;
b) on mesure un paramètre représentatif de la commande d'asservissement à l'aide d'au moins un capteur auxiliaire au niveau de mécanisation de cette commande dans ledit actionneur et on détermine, à partir du paramètre ainsi mesuré, un courant d'asservissement effectif ;
c) on calcule la différence entre ledit courant d'asservissement théorique déterminé à l'étape a) et ledit courant d'asservissement effectif déterminé à l'étape b) de manière à former un signal d'erreur ; et
d) on détecte un embarquement de ladite gouverne, si une valeur de comparaison dépendant dudit signal d'erreur est supérieure à une valeur de seuil pendant au moins une durée de confirmation.

Ainsi, grâce à l'invention, on compare le fonctionnement réel de la chaîne d'asservissement surveillée (qui est illustré par le courant d'asservissement effectif mesuré par le capteur auxiliaire) relativement à la commande de la gouverne, à un fonctionnement théorique attendu hors panne (qui est illustré par ledit courant d'asservissement théorique émis par le calculateur), ce qui permet de mettre en évidence tout embarquement lorsqu'il survient. Cette comparaison est effectuée en calculant une valeur de comparaison précisée ci-dessous.

Par conséquent, grâce à l'invention, on est en mesure de détecter, dans la chaîne d'asservissement surveillée, tout embarquement d'une gouverne asservie, quelle que soit l'origine de la panne. De plus, cette détection est particulièrement robuste, car elle ne provoque pas de fausses alarmes, et elle est applicable à tout type d'aéronef.

Le procédé conforme à l'invention permet donc de détecter, très rapidement, tous les types d'embarquements de gouverne (c'est-à-dire tous les profils dynamiques). On est ainsi en mesure de passiver une panne à l'origine d'un tel embarquement de façon très rapide, c'est-à-dire avant que la position de la gouverne ne soit trop importante, comme précisé ci-dessous. Ceci permet de limiter la valeur maximale atteinte par la gouverne lors d'une telle panne.

Dans un mode de réalisation simplifié, ledit courant d'asservissement théorique correspond directement audit courant émis par le calculateur (pour commander l'actionneur), qui est calculé de préférence par une unité de commande COM (COMmande) usuelle dudit calculateur.

En outre, dans un autre mode de réalisation, on calcule, à l'étape a), ledit courant d'asservissement théorique à l'aide de moyens de calcul auxiliaires, et ceci de la même manière que ledit calculateur (par exemple son unité de commande COM) calcule ledit courant émis. De préférence, ces moyens de calcul auxiliaires font partie d'une unité de surveillance MON (MONitor) usuelle dudit calculateur.

De plus, dans ce dernier mode de réalisation, à l'étape a), on limite avantageusement ledit courant d'asservissement théorique calculé, afin de rendre la surveillance robuste en particulier à des saturations en effort de l'actionneur.

En outre, de façon avantageuse, la valeur de seuil et la durée de confirmation, utilisées dans les traitements, peuvent être :

- soit fixes et prédéterminées ;
- soit variables, en fonction de conditions particulières précisées ci-dessous.

Par ailleurs, avantageusement, on vérifie si des conditions d'activation particulières sont remplies, et on met en oeuvre l'ensemble desdites étapes a) à d) lorsque ces conditions d'activation sont remplies.

En outre, dans un mode de réalisation simplifié, ladite valeur de comparaison utilisée à l'étape d) correspond simplement audit signal d'erreur calculé à l'étape c).

En revanche, dans un mode de réalisation préféré, on met en oeuvre une étape intermédiaire entre lesdites étapes c) et d), au cours de laquelle on filtre ledit signal d'erreur pour obtenir ladite valeur de comparaison. Dans ce cas, avantageusement, on utilise un filtre de Kalman, dont on optimise des paramètres de réglage pour améliorer la réponse et la stabilité du filtre, comme précisé ci-dessous.

De préférence, en cas de détection d'un embarquement à l'étape d), on amène automatiquement ledit actionneur dans un mode passif et on amène automatiquement un actionneur auxiliaire (qui est également destiné à la commande de la gouverne et qui était préalablement dans un mode passif), dans un mode actif, dans lequel il a alors pour fonction de régler la position de ladite gouverne (à la place dudit actionneur).

De plus, en cas de détection d'un embarquement à l'étape d), on peut émettre une information de détection, notamment à destination de moyens d'enregistrement usuels qui enregistrent des informations qui seront utilisées ultérieurement par des opérateurs de maintenance.

La présente invention concerne également un dispositif de détection d'au moins un embarquement d'une gouverne (aileron, spoiler, gouverne de profondeur, gouverne de direction) d'un aéronef, qui est asservie en position par une chaîne d'asservissement du type précité.

Selon l'invention, ledit dispositif de détection est remarquable en ce qu'il comporte :

- des premiers moyens pour déterminer un courant d'asservissement théorique représentatif de la commande d'asservissement émise par le calculateur ;
- au moins un capteur auxiliaire qui est lié à l'actionneur et qui est formé de manière à mesurer un paramètre représentatif de la commande d'asservissement, à partir duquel on détermine un courant d'asservissement effectif ;
- des deuxièmes moyens pour calculer la différence entre ledit courant d'asservissement théorique et ledit courant d'asservissement effectif de manière à former un signal d'erreur ; et
- des troisièmes moyens détecter un embarquement de la gouverne, si une valeur de comparaison dépendant dudit signal d'erreur est supérieure à une valeur de seuil pendant au moins une durée de confirmation.

Dans un premier mode de réalisation particulier, ledit actionneur qui règle la position de ladite gouverne est un actionneur hydraulique, et ledit capteur auxiliaire est agencé au niveau d'un tiroir distributeur de la servovalve dudit actionneur hydraulique (et mesure la position de ce dernier, comme paramètre).

En outre, dans un second mode de réalisation particulier, ledit actionneur qui règle la position de ladite gouverne est un actionneur à puissance électrique, c'est-à-dire qui utilise une puissance électrique pour fonctionner, et ledit capteur auxiliaire est agencé au niveau d'un moteur électrique de ce dernier (et mesure la vitesse de rotation dudit moteur électrique, comme paramètre).

Ledit actionneur à puissance électrique peut correspondre à un actionneur électro-hydrostatique, de type EHA (« Electro-Hydrostatic Actuator» en anglais), ou à un actionneur électromécanique de type EMA (« Electro-Mechanical Actuator» en anglais). Il peut également s'agir d'un actionneur hydraulique à secours électrique, de type EBHA («Electrical Backup Hydraulic Actuator» en anglais), lorsqu'il fonctionne en mode électrique.

Le dispositif de détection conforme à l'invention permet de détecter, automatiquement et rapidement, des pannes d'embarquement dans la boucle d'asservissement en position d'une gouverne d'un aéronef de sorte que, si une détection de panne est confirmée, une reconfiguration peut être effectuée automatiquement vers un équipement redondant sain.

Ledit dispositif de détection est avantageux puisqu'il permet de limiter les valeurs maximales atteintes en cas d'embarquement, et ainsi d'améliorer la contrôlabilité de l'aéronef et de diminuer les charges structurales (en cas de panne).

Le principe général de la surveillance mise en oeuvre comprend donc deux étapes successives :

- une génération d'un signal d'erreur par comparaison d'un courant d'asservissement théorique ou modélisé, élaboré dans le calculateur, avec une information issue de la mécanisation dans l'actionneur de la commande du calculateur et représentative du courant d'asservissement réellement appliqué sur l'actionneur ; et
- une prise de décision qui vise à détecter et confirmer la présence d'une panne sur le signal d'erreur.

La présente invention concerne également un système de commandes de vol électriques d'un aéronef, du type comportant :

- au moins un moyen usuel (comprenant par exemple un manche de commande) pour engendrer un ordre de commande de gouverne pour au moins une gouverne de l'aéronef ; et
- au moins une chaîne d'asservissement en position de cette gouverne, du type précité.

Selon l'invention, ce système de commandes de vol électriques est remarquable en ce qu'il comporte, de plus, au moins un dispositif de détection, tel que décrit précédemment.

Les figures du dessin annexé feront bien comprendre comment l'invention peut être réalisée. Sur ces figures, des références identiques désignent des éléments semblables.

La figure 1 illustre schématiquement une chaîne d'asservissement en position d'une gouverne d'aéronef, qui comporte un dispositif de détection conforme à l'invention.

Les figures 2 et 4 sont les schémas synoptiques d'un dispositif de détection, conformes respectivement à deux modes de réalisation différents de l'invention.

La figure 3 illustre schématiquement des moyens particuliers d'un dispositif de détection conforme à l'invention.

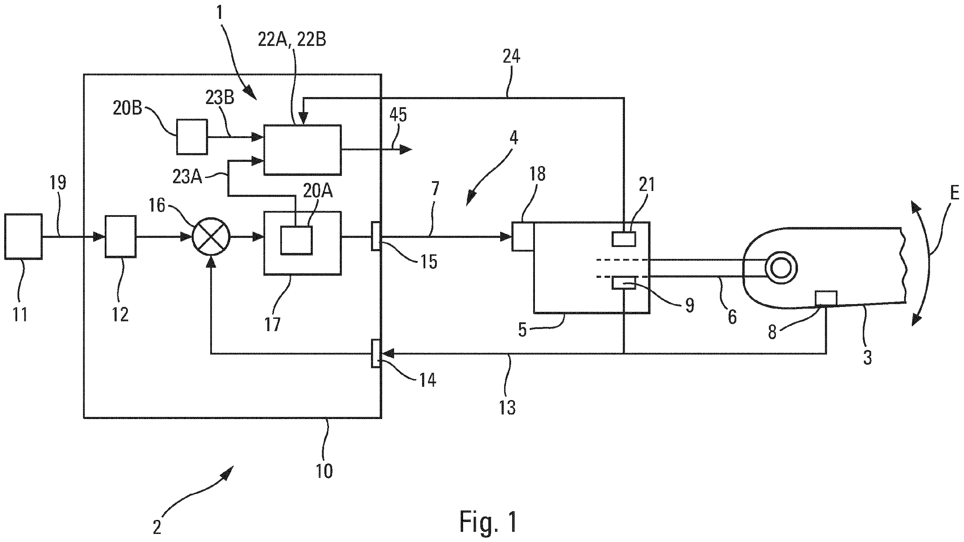

Le dispositif 1 conforme à l'invention est destiné à détecter au moins un embarquement d'une gouverne 3 (aileron, spoiler, gouverne de profondeur, gouverne de direction) d'un aéronef, en particulier d'un avion de transport, qui est asservie en position par une chaîne d'asservissement 2 (représentée sur la figure 1).

De façon usuelle, cette chaîne d'asservissement 2 fait partie d'un système de commandes de vol électriques 4 de l'aéronef (non représenté) et comporte :

- ladite gouverne 3 qui est mobile, en étant susceptible d'être braquée comme illustré par une flèche double E sur la figure 1, et dont la position par rapport à la structure de l'aéronef est réglée par au moins un actionneur usuel 5 ;
- ledit actionneur 5 qui règle la position de ladite gouverne 3, par exemple par l'intermédiaire d'une tige 6 qui agit sur cette dernière, en fonction d'au moins un ordre d'actionnement reçu par l'intermédiaire d'une liaison 7 ;
- au moins un capteur 8, 9 qui mesure la position effective de ladite gouverne 3. A cet effet, il peut s'agir d'un capteur 8 qui est directement associé à la gouverne 3 et/ou d'un capteur 9 qui mesure par exemple le déplacement de la tige 6 de l'actionneur 5 ; et
- un calculateur 10, par exemple un calculateur de commandes de vol :

  • qui reçoit des informations de commande de moyens 11, par l'intermédiaire d'une liaison 19. Ces moyens 11 sont des moyens usuels de génération d'informations de commande et comportent, par exemple, un manche de commande qui est susceptible d'être actionné par un pilote de l'aéronef et des capteurs inertiels ;
  • qui élabore de façon usuelle un ordre de commande de gouverne, à l'aide d'un moyen de calcul intégré 12 qui contient des lois de pilotage et qui utilise pour cette élaboration des informations de commande (par exemple l'action du pilote sur le manche de commande, paramètres qui indiquent la position de l'aéronef autour de son centre de gravité, facteurs de charge qu'il subit) reçues desdits moyens 11 ;
  • qui reçoit la position effective mesurée par le ou les capteurs 8 et 9, par l'intermédiaire d'une liaison 13, via une entrée 14 de type analogique ou numérique ;
  • qui calcule à partir des informations précédentes (ordre de commande de gouverne et position effective mesurée) ledit ordre d'actionnement, à l'aide d'un moyen de calcul 17 intégré tenant compte d'un gain prédéterminé ; et
  • qui transmet cet ordre d'actionnement (sous forme d'une commande d'asservissement) à un moyen de commande 18 (par exemple une servovalve ou un moteur électrique) de l'actionneur 5, par l'intermédiaire de la liaison 7 via une sortie 15 de type analogique ou numérique.

Ledit système de commandes de vol électriques 4 comporte, en plus de ladite chaîne d'asservissement 2, le dispositif 1 conforme à l'invention qui est destiné à détecter au moins un embarquement de la gouverne 3, et ceci quel que soit son profil dynamique et quelle que soit l'origine de la panne.

Pour ce faire, ledit dispositif de détection 1 comporte, comme représenté sur la figure 1 :

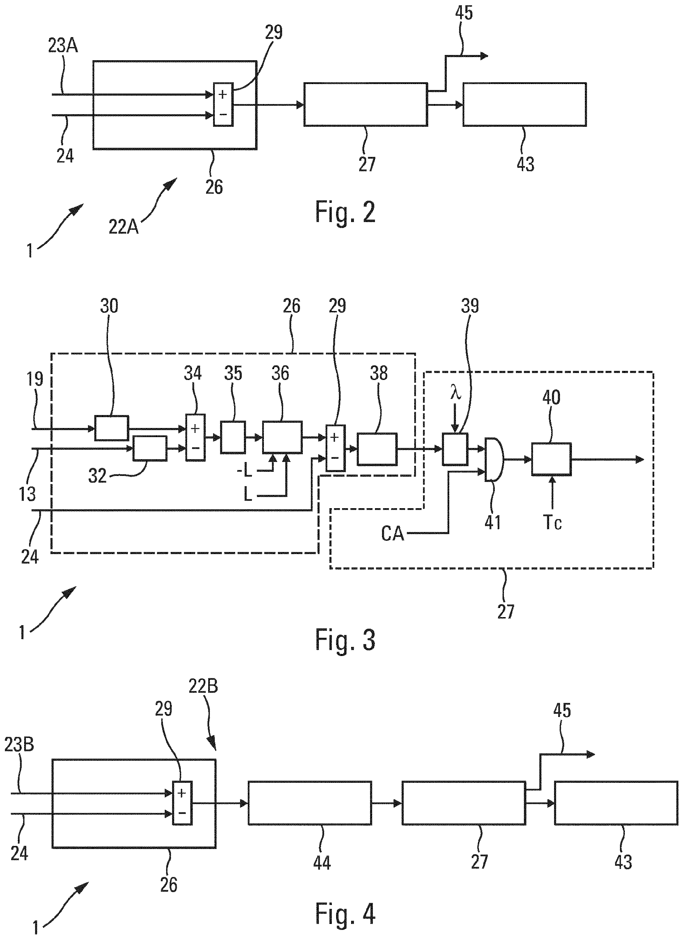

- des moyens 20A, 20B pour déterminer un courant d'asservissement théorique correspondant à ladite commande d'asservissement émise par ledit calculateur 10 ;
- au moins un capteur auxiliaire 21 qui est lié audit actionneur 5 et qui est formé de manière à mesurer un paramètre relatif au déplacement dudit actionneur 5, à partir duquel on détermine un courant d'asservissement effectif ; et
- une unité de traitement 22A, 22B qui est reliée par l'intermédiaire d'une liaison 23A, 23B auxdits moyens 20A, 20B et par l'intermédiaire d'une liaison 24 audit capteur auxiliaire 21 et qui comporte, comme représenté sur les figures 2 à 4, notamment :

  • des moyens 26 pour former un signal d'erreur à partir de la différence entre ledit courant d'asservissement théorique et ledit courant d'asservissement effectif ; et
  • des moyens 27 pour détecter un embarquement de la gouverne 3, si une valeur de comparaison dépendant dudit signal d'erreur est supérieure à une valeur de seuil λ pendant au moins une durée de confirmation Tc.

Par conséquent, ledit dispositif 1 compare le fonctionnement réel de la chaîne d'asservissement surveillée (qui est illustré par le courant d'asservissement effectif mesuré par le capteur auxiliaire 21) relativement à la commande de la gouverne 3, à un fonctionnement théorique attendu hors panne (qui est illustré par ledit courant d'asservissement théorique émis par les moyens 20A, 20B), ce qui permet de mettre en évidence le cas échéant un embarquement, c'est-à-dire un mouvement non commandé, de la gouverne 3.

Par conséquent, ledit dispositif 1 est en mesure de détecter très rapidement, dans la chaîne d'asservissement surveillée, tous les types d'embarquements (c'est-à-dire tous les profils dynamiques) de la gouverne 3 asservie, et ceci quelle que soit l'origine de la panne. On est ainsi en mesure de passiver cette panne très rapidement, c'est-à-dire avant que la position de la gouverne 3 ne soit trop importante, comme précisé ci-dessous. Ceci permet de limiter la valeur maximale atteinte par la gouverne 3.

De plus, cette détection est particulièrement robuste, car elle ne provoque pas de fausses alarmes et elle est applicable à tout type d'aéronef.

Dans un premier mode de réalisation particulier, ledit actionneur 5 qui règle la position de ladite gouverne 3 est un actionneur hydraulique usuel. Dans ce cas, ledit capteur auxiliaire 21 est agencé au niveau d'un tiroir distributeur de la servovalve dudit actionneur hydraulique 5 (et il mesure la position de ce dernier, comme paramètre). Cette position est convertie, de façon usuelle, à l'aide de moyens faisant partie de ladite unité de traitement 22A, 22B, en un courant électrique représentant ledit courant d'asservissement effectif.

En outre, dans un second mode de réalisation particulier, ledit actionneur 5 qui règle la position de ladite gouverne 3 est un actionneur usuel à puissance électrique, c'est-à-dire un actionneur qui utilise une puissance électrique pour fonctionner. Dans ce cas, ledit capteur auxiliaire 21 est agencé au niveau d'un moteur électrique de ce dernier (et il mesure la vitesse de rotation dudit moteur électrique, comme paramètre). Cette vitesse de rotation est ensuite convertie, de façon usuelle, à l'aide de moyens faisant partie de ladite unité de traitement 22A, 22B, en un courant électrique représentant ledit courant d'asservissement effectif.

Ledit actionneur à puissance électrique peut correspondre à un actionneur électro-hydrostatique, de type EHA (« Electro-Hydrostatic Actuator» en anglais), ou à un actionneur électromécanique de type EMA (« Electro-Mechanical Actuator» en anglais). Il peut également s'agir d'un actionneur hydraulique à secours électrique, de type EBHA («Electrical Backup Hydraulic Actuator» en anglais), lorsqu'il fonctionne en mode électrique. Un actionneur EBHA est un actionneur hybride comprenant les caractéristiques à la fois d'une servocommande hydraulique usuelle et d'un actionneur électro-hydrostatique de type EHA. En situation nominale (hors panne), l'actionneur EBHA fonctionne comme une servocommande usuelle. En revanche, en cas de panne affectant le mode hydraulique, cet actionneur EBHA passe en mode électrique et fonctionne comme un actionneur EHA.

Dans un mode de réalisation simplifié, ledit courant d'asservissement théorique représente directement ledit courant émis par le calculateur 10 (pour commander l'actionneur), et calculé de préférence par une unité de commande COM (COMmande) usuelle 20A dudit calculateur 10.

En outre, dans un autre mode de réalisation, ledit courant d'asservissement théorique est calculé par des moyens de calcul auxiliaires 20B, et ceci de la même manière que ledit calculateur 10 (son unité de commande COM) calcule ledit courant émis (le mode de calcul est similaire, mais des moyens redondants dissimilaires sont utilisés). De préférence, ces moyens de calcul auxiliaires 20B font partie d'une unité de surveillance MON (MONitor) usuelle dudit calculateur 10.

Le principe général de la surveillance mise en oeuvre par le dispositif 1, valable pour tous les aéronefs, est donc de comparer le courant calculé avec le courant mesuré via une information représentative de la mécanisation de la commande (par exemple la position du tiroir servovalve pour une servocommande ou la vitesse du moteur électrique pour un actionneur de type EHA ou EMA), suivi d'une étape de prise de décision. Pour mettre en oeuvre cette comparaison, les moyens 26 comportent un élément de calcul 29 pour calculer une différence de courant.

Sur la figure 3, on a représenté un mode de réalisation préféré des moyens 26 et 27. Dans ce mode de réalisation préféré, les moyens 26, d'une part, comprennent les moyens 20B pour déterminer le courant d'asservissement théorique, et d'autre part, calculent ledit signal d'erreur.

L'ordre reçu par la liaison 19 est, généralement, limité en vitesse et en position à des valeurs maximales opérationnelles (par des moyens 30) afin de rendre la surveillance plus robuste.

La position reçue par la liaison 13 est, en général, également limitée en position (par des moyens 32) à des valeurs maximales opérationnelles.

Dans un mode de réalisation particulier, comme indiqué ci-dessus, la surveillance est réalisée dans une unité MON. Le courant $i_{MON}$ est calculé à l'identique du courant $i_{COM}$ usuel en utilisant l'ordre $u_{MON}$ calculé par l'unité MON et, soit une position $x_{MON}$ disponible dans cette unité (en général la position de la gouverne mesurée par le capteur de position surface de type RVDT pour « Rotary Variable Differential Transducer » en anglais), soit une autre information de position qui peut être celle de la tige de l'actionneur (délivrée par le capteur élongation tige de type LVDT pour « Linear Variable Differential Transducer » en anglais), la position mesurée sur un actionneur adjacent (LVDT ou RVDT), une position redondée au niveau de l'actionneur surveillé ou une position estimée à partir d'un modèle comportemental de la gouverne 3 couplée à l'actionneur 5.

On a donc, par exemple, en notation discrète où $k$ est l'indice temporel :

$$i_{MON}(k) = K(u_{MON}(k) - x_{MON}(k))$$

La différence précédente est calculée par des moyens 34 et le gain K est appliqué par des moyens 35.

Le signal d'erreur $\varepsilon(k)$ à surveiller s'écrit donc :

$$\varepsilon(k) = i_{réel}(k) - i_{MON}(k) = i_{réel}(k) - K(u_{MON}(k) - x_{MON}(k))$$

Comme indiqué ci-dessus, dans un autre mode de réalisation, la surveillance peut également être réalisée dans l'unité COM. Dans ce cas le courant calculé est à l'identique du courant envoyé.

Le courant calculé $i_{MON}$ peut être, si nécessaire, traité afin d'être le plus en adéquation avec la valeur à laquelle il sera comparé. Par exemple, les caractéristiques du capteur 21 mesurant la grandeur surveillée peuvent être modélisées et appliquées sur le courant calculé.

Le courant calculé et traité est ensuite limité (limitation à +/-L sur la figure 3) par des moyens 36, afin de rendre la surveillance robuste en particulier à des saturations en effort de l'actionneur. En effet, en cas de saturation en effort (par exemple des efforts aérodynamiques très importants sur la gouverne 3), la position n'arrive pas à atteindre l'ordre et l'écart entre les deux informations pourrait donc devenir supérieur au seuil et ainsi conduire à de fausses détections.

Par ailleurs, cette limitation doit être suffisamment grande pour que l'on détecte également des blocages affectant la mécanisation de la commande.

Pour éviter les fausses détections vis à vis de la saturation en effort, on utilise une limitation L qui est telle que L < λ + valeur maximale de l'équivalent courant.

Pour pouvoir détecter un blocage au voisinage de OmA de courant de commande, il faut impérativement que L > λ.

En considérant une certaine marge liée aux incertitudes des capteurs de mesure, dans un mode de réalisation particulier, on utilise par exemple :

$$\lambda + \sigma_0 < L < \lambda + 8 +/- \sigma_{max}$$

avec :

- $\sigma_0$ l'erreur de mesure pour OmA de courant de commande ; et
- $\sigma_{max}$ l'erreur maximale de mesure.

Cette limitation peut être variable en fonction de différentes conditions extérieures afin de rendre la surveillance plus robuste ou plus efficace. Cette limitation peut dépendre notamment des efforts aérodynamiques (en particulier lorsqu'ils sont très importants ou très peu importants) appliqués sur la gouverne 3 ou de la phase de fonctionnement (en particulier pendant une phase de transition lors de la mise en route).

Dans ce cas, les règles de calcul de la valeur de L peuvent ne pas être respectées, si seulement les conditions entraînant cette modification de valeur sont en cohérence avec les contraintes déterminant ces règles. Par exemple, la limitation L peut devenir inférieure au seuil de la surveillance un certain temps, s'il est acceptable pendant ce temps de ne pas détecter un blocage à OmA du courant de commande. Inversement, la limitation L peut être supérieure au seuil (+ 8mA) si on est assuré d'évoluer dans un domaine où une saturation n'est pas possible.

La valeur de l'information représentative de la mécanisation de la commande $i_{COM}$ (reçue par la liaison 24) est alors soustraite (par les moyens 29) au courant calculé, traité et limité $i_{MON}$.

La valeur absolue (calculée par des moyens 38) de la valeur résultant de cette soustraction est ensuite comparée (par des moyens 39) à au moins un seuil λ positif. Ce seuil λ est déterminé en fonction d'erreurs statiques (la précision du générateur de courant, la précision de mesure des capteurs, la précision de chaque acquisition,...), d'erreurs dynamiques (les asynchronismes entre les voies COM et MON, car chaque voie possède sa propre horloge, le retard entre l'acquisition physique des informations et leur utilisation logiciel,...), et d'un temps de confirmation Tc.

En effet, un temps de confirmation Tc est appliqué au résultat (via des moyens 40) avant qu'un verrouillage (ou confirmation) de la panne soit effectué.

Les couples (seuil λ /temps de confirmation Tc) sont choisis afin :

- d'une part, d'être robustes aux erreurs, qu'elles soient statiques ou dynamiques ; et
- d'autre part, de permettre d'atteindre les objectifs assignés à la surveillance.

Le seuil λ notamment peut dépendre par exemple:

- du débattement de la gouverne 3 ;
- du dérapage de l'aéronef ;
- d'éventuelles turbulences, et du vent ; et
- d'un mode dégradé.

Une condition d'activation CA de la surveillance est appliquée (via une porte logique ET 41). Cette condition dépend étroitement de l'état du système et de l'actionneur 5 surveillé : l'actionneur est dans l'état actif, le capteur auxiliaire 21 est alimenté,...

Une fois la panne détectée et verrouillée, l'actionneur 5 en panne est passivé et une reconfiguration (par des moyens 43) est effectuée sur l'actionneur adjacent qui devient alors actif.

En effet, on prévoit, en général, deux actionneurs 5 par gouverne 3. Un calculateur dit « maître » qui réalise l'asservissement, en envoyant un courant de commande sur un actionneur qui est actif. L'autre actionneur, associé à un deuxième calculateur dit « esclave », est forcé en mode passif afin de suivre le mouvement de la gouverne 3. Si le dispositif 1 détecte une panne (conduisant à un embarquement de la gouverne 3), les moyens 43 passent l'actionneur actif en mode passif et donnent la main au calculateur esclave qui asservit le deuxième actionneur passé en mode actif.

De plus, en cas de détection d'un embarquement par les moyens 27, le dispositif 1 peut émettre, via une liaison 45, une information de détection, notamment à destination de moyens d'enregistrement usuels (non représentés) qui enregistrent des informations qui seront utilisées ultérieurement par des opérateurs de maintenance.

De préférence, en cas de détection d'un embarquement, le dispositif 1 réalise automatiquement la reconfiguration précitée et ne prévient pas le pilote pour ne pas le surcharger d'informations. Toutefois, si la situation est telle que la gouverne 3 n'est plus utilisable (lors d'un embarquement ou d'une panne de tous les actionneurs 5 de la gouverne 3 par exemple), le dispositif 1 peut émettre, via la liaison 45, un signal d'alerte à destination de l'équipage.

Par ailleurs, dans un mode de réalisation préféré, représenté sur la figure 4, l'unité de traitement 22B est complétée par rapport à l'unité de traitement 22A, par l'insertion, entre les moyens 26 de génération du signal d'erreur et les moyens 27 de prise de décision, par un élément dynamique 44 qui filtre le signal d'erreur afin d'améliorer les performances et la robustesse de la détection.

La surveillance conforme au premier mode de réalisation de la figure 2 est réalisée dans un contexte purement statique (sans mémoire). Un signal d'erreur est généré et comparé à un seuil $\lambda$ (déterminé en fonction de l'ensemble des erreurs propagées) et la panne est déclarée après un temps de confirmation Tc.

Soit $\varepsilon(k)$ le signal d'erreur qui fait l'objet du test de décision (par exemple, dans un mode de réalisation particulier, la différence entre le courant calculé par l'unité MON et la position donnée par le capteur du tiroir de la servovalve d'une servocommande hydraulique, qui est une image du courant envoyé par l'unité COM). L'indice k implique un fonctionnement à temps discret.

Le mode de réalisation préféré de la figure 4 a pour but d'améliorer la chaîne de surveillance décrite ci-dessus, en insérant en amont du seuillage, entre le calcul du signal d'erreur et la prise de décision, un élément 44 dont le rôle est de filtrer le signal, tout en provoquant un transitoire le plus court possible, qui est compatible avec les contraintes opérationnelles. Un avantage de cette solution est que la structure de la surveillance décrite ci-dessus en référence aux figures 2 et 3 est entièrement conservée.

On considère $\varepsilon(k)$ et $\hat{\varepsilon}(k)$ les signaux respectivement d'entrée et de sortie (le signal filtré) du bloc dynamique 44. Dans la nouvelle configuration, la prise de décision (seuil et temps de confirmation) s'effectue sur le signal $\hat{\varepsilon}(k)$.

Cet élément dynamique 44 correspond à un filtre de Kalman particulier, dont le calcul est réalisé à partir de la modélisation dans l'espace d'état de l'effet d'un embarquement.

On présente ci-après une modélisation de l'effet d'un embarquement.

Schématiquement, l'effet d'un embarquement se traduit par une dérive :

$$y(t) = at + b$$

$$(1)$$

Une dérive rapide ou lente correspond respectivement à un embarquement rapide (a est grand) ou lent (a est petit). Le terme b représente le point de départ de l'embarquement.

Le signal y(t) peut être représenté à l'aide de deux variables d'état $x_1$ et $x_2$ :

$$\begin{cases} \dot{x}_1(t) = 0 \\ \dot{x}_2(t) = x_1(t) \\ y(t) = x_2(t) \end{cases}$$

$$(2)$$

dont les conditions initiales sont :

$$\begin{cases} x_1(0) = a \\ x_2(0) = b \end{cases}$$

$$(3)$$

Si l'on discrétise ce modèle continu avec une période d'échantillonnage égale à T, en utilisant la méthode d'Euler :

$$\dot{x}(t) = \frac{x(k+T) - x(k)}{T}$$

$$(4)$$

on obtient :

$$\dot{x}_1(t) = 0 \implies x_1(k+T) = x_1(k)$$

$$(5)$$

$$\dot{x}_2(t) = x_1(t) \implies x_2(k+T) = x_2(k) + Tx_1(k)$$

$$(6)$$

En écrivant ce modèle d'état sous forme standard, il devient :

$$\begin{cases} \begin{bmatrix} x_1(k+1) \\ x_2(k+1) \end{bmatrix} = \begin{bmatrix} 1 & 0 \\ T & 1 \end{bmatrix} \begin{bmatrix} x_1(k) \\ x_2(k) \end{bmatrix} + \begin{bmatrix} w_1(k) \\ w_2(k) \end{bmatrix} \\ \varepsilon(k) = \begin{bmatrix} 0 & 1 \end{bmatrix} \begin{bmatrix} x_1(k) \\ x_2(k) \end{bmatrix} + v(k) \end{cases}$$

$$(7)$$

dont les matrices d'état sont:

$$A = \begin{bmatrix} 1 & 0 \\ T & 1 \end{bmatrix}$$

$$(8)$$

$$C = \begin{bmatrix} 0 & 1 \end{bmatrix}$$

$$(9)$$

$$B = 0$$

$$(10)$$

$$D = 0$$

$$(11)$$

Dans ce cas, A est la matrice de transition, B la matrice de commande, C la matrice d'observation et D la matrice de transmission directe. On s'intéresse à la modélisation du comportement dynamique du signal d'erreur $\varepsilon(k)$ dans l'espace d'état, le processus générateur de ce signal (qui intègre l'entrée forcée u(k) et son canal d'action) n'étant pas modélisé, ce qui explique les relations (10) et (11).

En outre, v(k) et w(k) représentent respectivement le bruit de mesure et le bruit d'état, supposés être des séquences blanches et Gaussiennes, stationnaires, de moyenne zéro et avec des matrices de covariance R et Q respectivement.

On présente ci-après le filtrage de Kalman en régime stationnaire.

$\overset{\wedge}{\varepsilon}(k)$ est généré en appliquant un filtrage de Kalman basé sur le modèle (7). Si l'on note K le gain de Kalman en régime stationnaire, l'observateur qui permet de reconstruire $\overset{\wedge}{\varepsilon}(k)$ s'écrit de la façon suivante :

$$\begin{cases} \hat{x}(k+1) = A\hat{x}(k) + K(\varepsilon(k) - \hat{\varepsilon}(k)) \\ \hat{\varepsilon}(k) = C\hat{x}(k) \end{cases}$$

$$(12)$$

La relation entre $\overset{\wedge}{\varepsilon}(k)$ et $\varepsilon(k)$ devient :

$$\hat{\varepsilon}(k) = \left( C(zI - A + KC)^{-1} K \right) \varepsilon(k)$$

$$(13)$$

On note la fonction de transfert :

$$F(z) = C(zI - A + KC)^{-1} K$$

$$(14)$$

F(z) est un filtre discret de type LTI (« Linear Time Invariant » en anglais) du second ordre, dont l'expression analytique est facilement calculable en introduisant les équations (8) et (9) dans l'équation (14) :

$$F(z) = \begin{bmatrix} 0 & 1 \end{bmatrix} \begin{bmatrix} z-1 & K_1 \\ -T & z-1+K_2 \end{bmatrix}^{-1} \cdot \begin{bmatrix} K_1 \\ K_2 \end{bmatrix}$$

$$(15)$$

ou encore :

$$F(z) = \frac{TK_1 + (z-1)K_2}{(z-1+K_2)(z-1) + K_1 T}$$

$$(16)$$

avec $K_1$ et $K_2$ les paramètres de réglage du filtre. Leur réglage influence donc les améliorations apportées par le filtre et notamment la valeur atteinte par la gouverne 3 au moment de la détection d'un embarquement.

On notera que :

- le filtre (16) présente un gain statique unitaire, c'est-à-dire qu'en régime permanent ($z = 1$), $\varepsilon(k) = \overset{\wedge}{\varepsilon}(k)$ ;
- il existe un couple ($K_1$, $K_2$) qui assure la recopie de $\varepsilon(k)$ avec deux périodes d'échantillonnage de retard ;
- concernant l'implémentation, l'équation (16) définit une relation récurrente entre $\overset{\wedge}{\varepsilon}(k)$ et $\varepsilon(k)$ (à chaque période d'échantillonnage k, la valeur de $\overset{\wedge}{\varepsilon}(k)$ est calculée en fonction des valeurs de $\overset{\wedge}{\varepsilon}(k\text{-}1)$, $\overset{\wedge}{\varepsilon}(k\text{-}2)$, $\varepsilon(k\text{-}1)$ et $\varepsilon(k\text{-}2)$), d'où l'effet mémoire ; et
- pour la mise en oeuvre opérationnelle du filtre, une méthode systématique de réglage pour ces deux degrés de liberté (paramètres libres) $K_1$ et $K_2$ est nécessaire.

On présente, ci-après, une étape destinée à optimiser les paramètres $K_1$ et $K_2$ pour obtenir une bonne réponse du filtre (rapidité et capacité de filtrage), tout en garantissant sa stabilité.

Les contraintes de stabilité sont de type "inégalité linéaire", déduites du critère de Jury. Un filtre linéaire discret est stable si ses pôles se trouvent tous dans le cercle de rayon unité dans le plan complexe. Le critère de Jury est un critère algébrique qui donne les conditions nécessaires et suffisantes pour que les racines d'un polynôme soient de module strictement inférieur à 1. Les conditions de stabilité se déduisent donc en appliquant ce critère au dénominateur de l'équation (16) pour déduire les contraintes de stabilité (17).

Cette étape revient à résoudre un problème d'optimisation non linéaire sous contraintes inégalitaires linéaires :

$$(\hat{K}_1, \hat{K}_2) = \arg\min_{K_1, K_2} \left\| M_0 - M(K_1, K_2) \right\|_l$$

sous contraintes de stabilité :

$$\begin{cases} K_1 > 0 \\ K_1 T - 2K_2 + 4 > 0 \\ K_1 T - K_2 + 2 > 0 \\ -K_1 T + K_2 > 0 \end{cases}$$

$$(17)$$

où M et Mo représentent respectivement le signal de sortie du filtre (16) et un signal de référence. I = 1,2 correspond à la norme utilisée.

Cette optimisation est réalisée par une méthode de type "model matching" (poursuite du modèle de référence). On choisit une réponse "cible" du filtre $M_0$ et on ajuste, via un processus d'optimisation approprié, les paramètres libres du système ($K_1$ et $K_2$ ici) pour que la réponse du système M suive au plus près la réponse du modèle de référence. On minimise donc l'écart quadratique (I = 2) ou l'écart d'amplitude (I = 1) entre la réponse cible et la sortie réelle du filtre (obtenue récursivement avec la relation (16)), tout en restant dans la région de stabilité. Des techniques standard d'optimisation peuvent être utilisées pour résoudre ce problème. La sortie de ce processus d'optimisation est le couple ($\hat{K}_1, \hat{K}_2$) recherché. Ce couple de paramètres est ensuite codé dans le calculateur pour la surveillance en temps réel.

On présente ci-après une première variante de réalisation.

Si $K_1 \approx 0$ dans l'équation (16), l'expression de F(z) devient :

$$F(z) = \frac{K_2}{z - 1 + K_2}$$

$$(18)$$

Ce cas particulier correspond au cas où le signal $\varepsilon(k)$ est modélisé par un biais (une constante) dans l'espace d'état. On obtient un filtre de Kalman en régime stationnaire du premier ordre.

Comme précédemment, il convient de trouver la valeur optimale du gain $K_2$ qui offre un bon compromis entre la capacité de filtrage et le transitoire introduit par le filtre. Pour garantir la stabilité du filtre et afin d'obtenir une réponse hyper amortie, la plage de réglage du gain est l'intervalle (0, 1).

La valeur de $K_2$ qui réduit au maximum la position atteinte par la gouverne 3 après la détection d'une panne pour différentes vitesses d'embarquement est retenue pour son implémentation dans le dispositif 1.

En outre, on présente ci-après une seconde variante de réalisation.

Dans cette variante, on considère le filtre de Kalman à gain variable, calculé sur la base du modèle (7). Les équations de filtrage dans ce cas s'écrivent :

$$\begin{cases} K = P_{k+1/k} C^t (C P_{k+1/k} C^t + R)^{-1} \\ \hat{x}_{k+1/k+1} = \hat{x}_{k+1/k} + K(\varepsilon_{k+1} - C\hat{x}_{k+1/k}) \\ P_{k+1/k+1} = (I - KC) P_{k+1/k} \\ \hat{x}_{k+1/k} = A\hat{x}_{k/k} \\ P_{k+1/k} = A P_{k/k} A^t + Q \\ \hat{\varepsilon}_k = C\hat{x}_{k+1/k+1} \end{cases}$$

$$(19)$$

où $K$ est le gain du filtre de Kalman :

$$K = \begin{bmatrix} K_1 \\ K_2 \end{bmatrix}$$

$$(20)$$

La relation entre $\varepsilon(k)$ et $\hat{\varepsilon}(k)$ est ainsi de nature LTV (« Linear Time Variant » en anglais).

$P_{k+1/k}$ et $P_{k+1/k+1}$ sont les matrices de covariance respectivement dans les phases de prédiction et de correction (mise à jour ou filtrage), et les matrices $\hat{x}_{k+1/k}$ et $\hat{x}_{k+1/k+1}$ représentent respectivement les estimations de l'état prédite et mise à jour.

Comme indiqué ci-dessus, Q et R sont respectivement les matrices de pondération du bruit d'état w(k) et du bruit de mesure v(k).

La valeur de R peut être fixée en fonction des caractéristiques des bruits des capteurs.

Le choix de la matrice Q conditionne les performances du filtre :

$$Q = \begin{bmatrix} Q_1 & 0 \\ 0 & Q_2 \end{bmatrix} \qquad (21)$$

Cette matrice définit le bassin d'attraction du filtre de Kalman et influence fortement la bande passante du filtre. Une valeur heuristique et approximative de $(Q_1, Q_2)$ peut être obtenue par des essais en simulation et en employant un processus d'affinement itératif.

## Revendications

**1.** Procédé de détection d'un embarquement d'une gouverne (3) qui est asservie en position par une chaîne d'asservissement (2) faisant partie d'un système (4) de commandes de vol électriques de l'aéronef et comportant :

- ladite gouverne (3) qui est mobile, et dont la position par rapport à l'aéronef est réglée par au moins un actionneur (5) ;
- ledit actionneur (5) qui règle la position de ladite gouverne (3), en fonction d'au moins un ordre d'actionnement reçu sous forme de commande d'asservissement ;
- au moins un capteur (8, 9) qui mesure la position effective de ladite gouverne (3) ; et
- au moins un calculateur (10) qui élabore un ordre de commande de gouverne, qui reçoit ladite position effective mesurée et qui en déduit un ordre d'actionnement qui est transmis audit actionneur (5) sous forme d'une commande d'asservissement,

procédé selon lequel on réalise, de façon automatique et répétitive, la suite d'étapes successives suivante :

a) on détermine un courant d'asservissement théorique représentatif de ladite commande d'asservissement émise par ledit calculateur (10) ;
b) on mesure un paramètre représentatif de la commande d'asservissement à l'aide d'au moins un capteur auxiliaire (21) au niveau de la mécanisation de cette commande dans ledit actionneur (5) et on détermine, à partir dudit paramètre mesuré, un courant d'asservissement effectif ;
c) on calcule la différence entre ledit courant d'asservissement théorique déterminé à l'étape a) et ledit courant d'asservissement effectif déterminé à l'étape b) de manière à former un signal d'erreur ; et
d) on détecte un embarquement de ladite gouverne (3), si une valeur de comparaison dépendant dudit signal d'erreur est supérieure à une valeur de seuil pendant au moins une durée de confirmation.

**2.** Procédé selon la revendication 1,
**caractérisé en ce qu'**à l'étape a), ledit courant d'asservissement théorique correspond audit courant émis par le calculateur (10).

**3.** Procédé selon la revendication 1,
**caractérisé en ce qu'**à l'étape a), on calcule ledit courant d'asservissement théorique à l'aide de moyens de calcul auxiliaires (20B) de la même manière que ledit calculateur (10) calcule ledit courant émis.

**4.** Procédé selon la revendication 3,
**caractérisé en ce qu'**à l'étape a), on limite ledit courant d'asservissement théorique calculé.

**5.** Procédé selon l'une quelconque des revendications précédentes, **caractérisé en ce qu'**au moins l'une des valeurs suivantes : valeur de seuil et durée de confirmation, est variable en fonction de conditions particulières.

**6.** Procédé selon l'une quelconque des revendications précédentes, **caractérisé en ce que** l'on vérifie si des conditions d'activation particulières sont remplies, et **en ce que** l'on met en oeuvre l'ensemble desdites étapes a) à d) lorsque ces conditions d'activation particulières sont remplies.

7. Procédé selon l'une quelconque des revendications 1 à 6,
**caractérisé en ce que** ladite valeur de comparaison correspond audit signal d'erreur.

8. Procédé selon l'une quelconque des revendications 1 à 6,
**caractérisé en ce qu'**entre les étapes c) et d), on met en oeuvre une étape intermédiaire, au cours de laquelle on filtre ledit signal d'erreur pour obtenir ladite valeur de comparaison.

9. Procédé selon la revendication 8,
**caractérisé en ce qu'**à ladite étape intermédiaire, on utilise un filtre de Kalman, dont on optimise des paramètres de réglage pour améliorer la réponse et la stabilité du filtre.

10. Procédé selon l'une quelconque des revendications précédentes,
**caractérisé en ce qu'**en cas de détection d'un embarquement à l'étape a), on amène automatiquement ledit actionneur dans un mode passif, et on amène automatiquement un actionneur auxiliaire, qui était préalablement dans un mode passif, dans un mode actif dans lequel il a alors pour fonction de régler la position de ladite gouverne (3).

11. Procédé selon l'une quelconque des revendications précédentes,
**caractérisé en ce qu'**en cas de détection d'un embarquement à l'étape d), on émet une information de détection.

12. Dispositif de détection d'un embarquement d'une gouverne d'aéronef qui est asservie en position par une chaîne d'asservissement (2), ladite chaîne d'asservissement (2) faisant partie d'un système (4) de commandes de vol électriques de l'aéronef et comportant :

- ladite gouverne (3) qui est mobile, et dont la position par rapport à l'aéronef est réglée par au moins un actionneur (5) ;
- ledit actionneur (5) qui règle la position de ladite gouverne (3), en fonction d'au moins un ordre d'actionnement reçu sous forme de commande d'asservissement ;
- au moins un capteur (8, 9) qui mesure la position effective de ladite gouverne (3) ; et
- un calculateur (10) qui élabore un ordre de commande de gouverne, qui reçoit ladite position effective mesurée et qui en déduit un ordre d'actionnement qui est transmis audit actionneur (5) sous forme d'une commande d'asservissement, **caractérisé en ce que** ledit dispositif (1) comporte :

    - des premiers moyens (20A, 20B) pour déterminer un courant d'asservissement théorique représentatif de ladite commande d'asservissement émise par ledit calculateur (10) ;
    - au moins un capteur auxiliaire (21) qui est lié audit actionneur (5) et qui est formé de manière à mesurer un paramètre représentatif de la commande d'asservissement, à partir duquel on détermine un courant d'asservissement effectif ;
    - des deuxièmes moyens (26) pour calculer la différence entre ledit courant d'asservissement théorique et ledit courant d'asservissement effectif de manière à former un signal d'erreur ; et
    - des troisièmes moyens (27) pour détecter un embarquement de ladite gouverne (5), si une valeur de comparaison dépendant dudit signal d'erreur est supérieure à une valeur de seuil pendant au moins une durée de confirmation.

13. Dispositif selon la revendication 12,
**caractérisé en ce que** ledit actionneur (5) qui règle la position de ladite gouverne est un actionneur hydraulique, et **en ce que** ledit capteur auxiliaire (21) est agencé au niveau d'un tiroir distributeur de la servovalve.

14. Dispositif selon la revendication 12,
**caractérisé en ce que** ledit actionneur (5) qui règle la position de ladite gouverne est un actionneur à puissance électrique, et **en ce que** ledit capteur auxiliaire (21) est agencé au niveau d'un moteur électrique de ce dernier.

15. Système de commandes de vol électriques d'un aéronef, ledit système (4) comportant au moins un moyen (11) pour engendrer un ordre de commande de gouverne pour au moins une gouverne (3) de l'aéronef et au moins une chaîne d'asservissement (2) en position de cette gouverne (3), qui comprend :

- ladite gouverne (3) qui est mobile, et dont la position par rapport à l'aéronef est réglée par au moins un actionneur (5) ;
- ledit actionneur (5) qui règle la position de ladite gouverne (3), en fonction d'au moins un ordre d'actionnement reçu ;
- au moins un capteur (8, 9) qui mesure la position effective de ladite gouverne (3) ; et
- un calculateur (10) qui élabore ledit ordre de commande de gouverne, qui reçoit ladite position effective et qui en déduit un ordre d'actionnement qui est transmis audit actionneur (5),

**caractérisé en ce qu'**il comporte, de plus, au moins un dispositif (1) de détection, tel que celui spécifié sous l'une quelconque des revendications 12 à 14.

**Patentansprüche**

1. Verfahren zum Detektieren einer Auslenkung einer Steuerfläche (3), die durch eine Rückkopplungskette (2), die Teil eines elektrischen Flugsteuerungssystems (4) des Luftfahrzeugs ist, positionsgesteuert ist und Folgendes umfasst:

   - die Steuerfläche (3), die beweglich ist und deren Position im Verhältnis zum Luftfahrzeug durch mindestens ein Stellglied (5) geregelt wird;
   - das Stellglied (5), das die Position der Steuerfläche (3) in Abhängigkeit von mindestens einer Betätigungsanweisung regelt, die als Rückkopplungsbefehl empfangen wird;
   - mindestens einen Sensor (8, 9), der die effektive Position der Steuerfläche (3) misst; und
   - mindestens einen Rechner (10), der eine Steuerflächensteueranweisung ausarbeitet, welche die gemessene effektive Position empfängt und die daraus eine Betätigungsanweisung ableitet, die als Rückkopplungsbefehl an das Stellglied (5) übertragen wird,

   wobei gemäß dem Verfahren die folgende Reihe aufeinanderfolgender Schritte automatisch und wiederholt ausgeführt wird:

   a) Bestimmen eines theoretischen Rückkopplungsstroms, der für den Rückkopplungsbefehl, der von dem Rechner (10) abgegeben wird, repräsentativ ist;
   b) Messen eines Parameters, der für den Rückkopplungsbefehl repräsentativ ist, anhand mindestens eines Hilfssensors (21) bei der Mechanisierung dieses Befehls in dem Stellglied (5), und Bestimmen aus dem gemessenen Parameter eines effektiven Rückkopplungsstroms;
   c) Berechnen der Differenz zwischen dem theoretischen Rückkopplungsstrom, der in Schritt a) bestimmt wird, und dem effektiven Rückkopplungsstrom, der in Schritt b) bestimmt wird, um ein Fehlersignal zu bilden; und
   d) Detektieren einer Auslenkung der Steuerfläche (3), falls ein Vergleichswert, der von dem Fehlersignal abhängig ist, mindestens während einer Bestätigungsdauer größer als ein Schwellenwert ist.

2. Verfahren nach Anspruch 1, **dadurch gekennzeichnet, dass** in Schritt a) der theoretische Rückkopplungsstrom dem Strom entspricht, der durch den Rechner (10) abgegeben wird.

3. Verfahren nach Anspruch 1, **dadurch gekennzeichnet, dass** in Schritt a) der theoretische Rückkopplungsstrom anhand von Hilfsrechenmitteln (20B) ebenso berechnet wird, wie der Rechner (10) den abgegebenen Strom berechnet.

4. Verfahren nach Anspruch 3, **dadurch gekennzeichnet, dass** in Schritt a) der berechnete theoretische Rückkopplungsstrom eingeschränkt wird.

5. Verfahren nach einem der vorhergehenden Ansprüche, **dadurch gekennzeichnet, dass** mindestens einer der folgenden Werte: Schwellenwert und Bestätigungsdauer, in Abhängigkeit von bestimmten Bedingungen variabel ist.

6. Verfahren nach einem der vorhergehenden Ansprüche, **dadurch gekennzeichnet, dass** überprüft wird, ob bestimmte Aktivierungsbedingungen erfüllt sind, und dass alle Schritte a) bis d) umgesetzt werden, wenn diese bestimmten Aktivierungsbedingungen erfüllt sind.

7. Verfahren nach einem der Ansprüche 1 bis 6, **dadurch gekennzeichnet, dass** der Vergleichswert dem Fehlersignal entspricht.

8. Verfahren nach einem der Ansprüche 1 bis 6, **dadurch gekennzeichnet, dass** zwischen den Schritten c) und d) ein Zwischenschritt umgesetzt wird, bei dem das Fehlersignal gefiltert wird, um den Vergleichswert zu erzielen.

9. Verfahren nach Anspruch 8, **dadurch gekennzeichnet, dass** in dem Zwischenschritt ein Kalman-Filter verwendet wird, dessen Regelparameter optimiert werden, um die Reaktion und die Stabilität des Filters zu verbessern.

10. Verfahren nach einem der vorhergehenden Ansprüche, **dadurch gekennzeichnet, dass** für den Fall der Detektion einer Auslenkung in Schritt a) das Stellglied automatisch in einen passiven Modus versetzt wird und ein Hilfsstellglied, das sich zuvor in einem passiven Modus befand, automatisch in einen aktiven Modus versetzt wird, in dem seine Funktion dann darin besteht, die Position der Steuerfläche (3) zu regeln.

11. Verfahren nach einem der vorhergehenden Ansprüche, **dadurch gekennzeichnet, dass** für den Fall der Detektion einer Auslenkung in Schritt d) eine Detektionsinformation abgegeben wird.

12. Vorrichtung zum Detektieren einer Auslenkung einer Luftfahrzeugsteuerfläche, die durch eine Rückkopplungskette (2) positionsgesteuert ist, wobei die Rückkopplungskette (2) Teil eines elektrischen Flugsteuerungssystems (4) des Luftfahrzeugs ist, und Folgendes umfasst:

- die Steuerfläche (3), die beweglich ist und deren Position im Verhältnis zum Luftfahrzeug durch mindestens ein Stellglied (5) geregelt wird;
- das Stellglied (5), das die Position der Steuerfläche (3) in Abhängigkeit von mindestens einer Betätigungsanweisung regelt, die als Rückkopplungsbefehl empfangen wird;
- mindestens einen Sensor (8, 9), der die effektive Position der Steuerfläche (3) misst; und
- einen Rechner (10), der eine Steuerflächensteueranweisung ausarbeitet, welche die gemessene effektive Position empfängt und die daraus eine Betätigungsanweisung ableitet, die als Rückkopplungsbefehl an das Stellglied (5) übertragen wird,

**dadurch gekennzeichnet, dass** die Vorrichtung (1) Folgendes umfasst:

- erste Mittel (20A, 20B) zum Bestimmen eines theoretischen Rückkopplungsstroms, der für den Rückkopplungsbefehl repräsentativ ist, der von dem Rechner (10) abgegeben wird;
- mindestens einen Hilfssensor (21), der mit dem Stellglied (5) verbunden ist und der derart gebildet ist, dass er einen Parameter misst, der für den Rückkopplungsbefehl repräsentativ ist, aus dem ein effektiver Rückkopplungsstrom bestimmt wird;
- zweite Mittel (26) zum Berechnen der Differenz zwischen dem theoretischen Rückkopplungsstrom, der in Schritt a) bestimmt wird, und dem effektiven Rückkopplungsstrom, der in Schritt b) bestimmt wird, um ein Fehlersignal zu bilden; und
- dritte Mittel (27) zum Detektieren einer Auslenkung der Steuerfläche (5), falls ein Vergleichswert, der von dem Fehlersignal abhängig ist, mindestens während einer Bestätigungsdauer größer als ein Schwellenwert ist.

13. Vorrichtung nach Anspruch 12, **dadurch gekennzeichnet, dass** das Stellglied (5), das die Position der Steuerfläche regelt, ein hydraulisches Stellglied ist, und dass der Hilfssensor (21) an einem Wegeventil des Servoventils angeordnet ist.

14. Vorrichtung nach Anspruch 12, **dadurch gekennzeichnet, dass** das Stellglied (5), das die Position der Steuerfläche regelt, ein elektrisch betriebenes Stellglied ist, und dass der Hilfssensor (21) an einem Elektromotor desselben angeordnet ist.

15. Elektrisches Flugsteuerungssystem eines Luftfahrzeugs, wobei das System (4) mindestens ein Mittel (11), um eine Steuerflächensteueranweisung für mindestens eine Steuerfläche (3) des Luftfahrzeugs zu generieren, und mindestens eine Positionsrückkopplungskette (2) dieser Steuerfläche (3) umfasst, umfassend:

- die Steuerfläche (3), die beweglich ist und deren Position im Verhältnis zum Luftfahrzeug durch mindestens ein Stellglied (5) geregelt wird;
- das Stellglied (5), das die Position der Steuerfläche (3) in Abhängigkeit von mindestens einer Betätigungsanweisung regelt, die als Rückkopplungsbefehl empfangen wird;
- mindestens einen Sensor (8, 9), der die effektive Position der Steuerfläche (3) misst; und
- einen Rechner (10), der eine Steuerflächensteueranweisung ausarbeitet, welche die gemessene effektive Position empfängt und die daraus eine Betätigungsanweisung ableitet, die an das Stellglied (5) übertragen wird,

**dadurch gekennzeichnet, dass** es zudem mindestens eine Detektionsvorrichtung (1), wie in einem der Ansprüche 12 bis 14 vorgegeben, umfasst.

**Claims**

1. A detection method for an uncontrolled movement of a control surface (3) which is servo-controlled in position by a feedback loop (2) belonging to an electrical flying command system (4) of the aircraft and comprising:

   - said control surface (3) being mobile and the position of which with respect to the aircraft is adjusted by at least one actuator (5);
   - said actuator (5) that adjusts the position of the control surface (3) as a function of at least one actuating order received as a feedback command;
   - at least one sensor (8, 9) measuring the effective position of said control surface (3); and
   - at least one calculator (10) developing a control surface command order, that receives said measured effective position and deducts from it an actuating order that is transmitted to said actuator (5) as a feedback command,

   a method where on an automatic and repetitive way, the following sequence of successive steps is followed:

   a) a theoretical feedback current being representative of said feedback command emitted bay said calculator (10) is determined;
   b) a parameter being representative of the feedback command is measured with the help of at least one auxiliary sensor (21) at the level of the mechanization of such command into said actuator (5) and an effective feedback current is determined from said measured parameter;
   c) the difference between said theoretical feedback current determined at step a) and said effective feedback current determined at step b) is calculated so as to form an error signal; and
   d) an uncontrolled movement of said control surface (3) is detected if a comparison value depending on said error signal is higher than a threshold value during at least one confirmation time.

2. The method according to claim 1,
   **characterized in that** at step a), said theoretical feedback current corresponds to said current emitted by the calculator (10).

3. The method according to claim 1, ch
   aracterized in that at step a), said theoretical feedback current is calculated thru auxiliary calculation means (20B) on the same way as said calculator (10) calculates said emitted current.

4. The method according to claim 3,
   **characterized in that** at step a),said calculated theoretical feedback current is limited.

5. The method according to any one of the preceding claims,
   **characterized in that** at least one of the following values : threshold value and confirmation time, is variable as a function of particular conditions.

6. The method according to any one of the preceding claims,
   **characterized in that** it is checked if particular activation conditions are fulfilled, and **in that** the set of said steps a) to d) is implemented when these particular activation conditions are fulfilled.

7. The method according to any one of claims 1 to 6,
   **characterized in that** said comparison value corresponds to said error signal.

8. The method according to any one of claims 1 to 6,
   **characterized in that** an intermediate step is implemented between said steps c) and d), upon which said error signal is filtered to obtain said comparison value.

9. The method according to claim 8,

**characterized in that** at said intermediate step, a Kalman filter is used, control parameters of which are optimized to improve the response and the stability of the filter.

10. The method according to any one of the preceding claims, **characterized in that**, in the case of a detection of an uncontrolled movement at step a), said actuator is automatically switched into a passive mode and an auxiliary actuator which was previously in a passive mode is automatically switched into an active mode, in which it has then as a function to adjust the position of said control surface (3).

11. The method according to any one of the preceding claims, **characterized in that**, in the case of a detection of an uncontrolled movement at step d), a detection piece of information is emitted.

12. A detection device for an uncontrolled movement of a control surface of an aircraft which is servo-controlled in position by a feedback loop (2), said feedback loop (2) belonging to an electrical flying command system (4) of the aircraft and comprising:

   - said control surface (3) being mobile and the position of which with respect to the aircraft is adjusted by at least one actuator (5);
   - said actuator (5) that adjusts the position of the control surface (3) as a function of at least one actuating order received as a feedback command;
   - at least one sensor (8, 9) measuring the effective position of said control surface (3); and
   - one calculator (10) developing a control surface command order, that receives said measured effective position and deducts from it an actuating order that is transmitted to said actuator (5) as a feedback command,

   **characterized in that** said device (1) comprises:

   - first means (20A, 20B) to determine a theoretical feedback current representative of said feedback command emitted by said calculator (10);
   - at least one auxiliary sensor (21) being connected to said actuator (5) and which is provided so as to measure a parameter representative of the feedback command from which an effective feedback current is determined;
   - second means (26) to calculate the difference between said theoretical feedback current and said effective feedback current so as to create an error signal; and
   - third means (27) to detect an uncontrolled movement of the control surface (3) if a comparison value depending on said error signal is higher than a threshold value during at least one confirmation time.

13. The device according to claim 12, **characterized in that** said actuator (5) adjusting the position of said control surface is a hydraulic actuator, and **in that** said auxiliary sensor (21) is arranged at the level of a slide of the servovalve.

14. The device according to claim 12, **characterized in that** said actuator (5) that adjusts the position of said control surface is a hydraulic actuator, and **in that** said auxiliary sensor (21) is arranged at the level of an electrical engine of the latter.

15. An electrical flying command system of an aircraft, said system (4) comprising at least one means (11) to generate a command order for a control surface for at least one control surface (3) of the aircraft and at least one feedback loop (2) in position of such control surface (3), comprising:

   - said control surface (3) being mobile and the position of which with respect to the aircraft is adjusted by at least one actuator (5);
   - said actuator (5) that adjusts the position of the control surface (3) as a function of at least one actuating order received;
   - at least one sensor (8, 9) measuring the effective position of said control surface (3); and
   - one calculator (10) developing a control surface command order, that receives said measured effective position and deducts from it an actuating order that is transmitted to said actuator (5),

   **characterized in that** it comprises in addition a detection device (1), such as the one specified in any one of claims 12 to 14.

Fig. 1

Fig. 2

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2936067